# EUROPEAN PATENT APPLICATION

(11) **EP 4 632 881 A1**
(43) Date of publication of application: **15.10.2025**
(21) Application number: 24865822.1
(22) Date of filing: 11.09.2024
(51) Int. Cl.: H01M 10/659, H01M 10/658, H01M 50/211, H01M 50/242, H01M 50/289, H01M 50/502

(54) **CELL ASSEMBLY AND BATTERY PACK INCLUDING SAME**

(30) Priority: 12.09.2023 KR 20230120778; 30.01.2024 KR 20240014106
(71) Applicant: LG Energy Solution, Ltd., Seoul 07335 (KR)
(72) Inventor: LEE, Jae Hyun, Daejeon 34122 (KR)
(74) Representative: Plasseraud IP
(86) International application number: PCT/KR2024/013761
(87) International publication number: WO 2025/058383

(57) **Abstract**

Disclosed herein a cell assembly including a cell stack comprising a plurality of stacked cells having electrode leads protruding therefrom; and a heat transfer prevention pad having resistance to heat transfer and provided on both sides of the cell stack, and a battery pack including the cell assembly.

## Description

This application claims the benefit of priority based on Korean Patent Application No. 10-2023-0120778, filed on September 12, 2023, and Korean Patent Application No. 10-2024-0014106, filed on January 30, 2024, and all of the contents of the Korean Patent Application No. 10-2023-0120778 and Korean Patent Application No. 10-2024-0014106 are incorporated by reference into this disclosure.

### [Technical Field]

The present disclosure relates to a cell assembly and a battery pack including the same, and more particularly to a cell assembly having thermal stability and a battery pack including the same.

### [Background]

The operating voltage of one cell included in the secondary battery is approximately 2.5V to 4.5V. Therefore, when a higher output voltage than this is required, a plurality of cells may be connected in series to comprise a battery pack. In addition, a battery pack may be configured by connecting a plurality of cells in parallel according to the charge and discharge capacity required for the battery pack. Accordingly, the number of cells included in the battery pack may be varied depending on the required output voltage or charge and discharge capacity.

When a battery pack is to be configured by connecting a plurality of cells in series/parallel, it is common to first configure a cell assembly including at least two cells, and to configure the battery pack by adding such cell assemblies and other components.

The battery pack is a housing structure made of a metal material in the form of a box, in which a plurality of cell assemblies is accommodated in close contact inside. In other words, each of the cell assemblies is disposed in the battery pack in a maximally close contact state so that there is no wasted space.

However, such a structure as described above has a problem that it is highly vulnerable to a situation in which any one of the cell assemblies ignites. In other words, when one of the cell assemblies undergoes a thermal runaway and generates high-temperature heat, the high-temperature heat may be instantly transferred to other cell assemblies located adjacent thereto, and as a result, a dangerous situation may occur in which the overall cell assembly accommodated in the interior of the battery pack explodes.

When the battery pack is applied to an electric vehicle or the like, it is necessary to delay the transfer of heat as much as possible from the initial point at which the abnormal phenomenon occurs to the point at which the explosion occurs, thereby securing time for the driver to evacuate.

Therefore, conventionally, research has been conducted on methods for maximally delaying the time taken for heat to transfer from any one cell assembly in which the thermal runaway occurred to other cell assemblies.

### [Related Art Document]

### [Patent Document]

Korean Patent Publication No. 10-2021-0041950

### [Summary]

### [Technical Problem]

Accordingly, the present disclosure has been devised to solve the above-mentioned problems, and it is an object of the present disclosure to provide a cell assembly having a structure capable of maximally suppressing the heat dissipation when high-temperature heat is generated due to an abnormal phenomenon in a plurality of stacked cells.

Another object of the present disclosure is to provide a battery pack having a structure capable of delaying thermal propagation between a plurality of accommodated cell assemblies.

Other objects and advantages of the present disclosure can be understood by the following description, and will become more apparent from embodiments of the present disclosure. In addition, it will be readily apparent that the objects and advantages of the present disclosure can be realized by the means and combinations thereof disclosed in the claims of the patent.

### [Technical Solution]

The present disclosure provides a cell assembly including: a cell stack comprising a plurality of stacked cells having electrode leads protruding therefrom; a busbar frame including a busbar in electrically connected with electrode leads of each of the cells, coupling to at least one of a front and a rear of the cell stack; and a heat transfer prevention pad having resistance to heat transfer and provided on both sides of the cell stack.

The heat transfer prevention pad may include a heat absorbing pad including a phase change material and absorbing external heat, and a heat insulating pad having a high thermal resistance.

The cell assembly wherein the heat transfer prevention pad is configured to attach any one of the heat absorbing pad and the heat insulating pad to one side of the cell stacked at an outermost position of the cell stack.

A pair of supporting members provided on both sides of the cell stack and coupled to side portions of the busbar frame to support the plurality of cells, wherein the heat transfer prevention pad may be interposed between the cell stack and the supporting members.

The cell stack may further include a compression pad interposed between any one pair of cells of the plurality of cells.

**In** addition, the present disclosure provides a battery pack including: a cell assembly of the present disclosure; and a pack case including a seating space in which the cell assembly is seated, wherein the pack case including: a base plate supporting a lower portion of the cell assembly; and a side beam coupled to an edge part of the base plate to support a side portion of the cell assembly.

A plurality of cell assemblies is seated in the seating space, and the pack case may further include a cross beam provided between any one pair of adjacent cell assemblies.

The cross beam may be adhered to and coupled to side portions of the cell assemblies such that there is no gap between the cross beam and the cell assemblies.

The side surfaces of the cross beam may be in close contact with the heat absorbing pad of the cell assembly facing it.

The cross beam may be coupled to each of the adjacent disposed cell assemblies, and the cross beam may be coupled to the base plate to fix the cell assembly to the pack case.

The heat transfer prevention pad may include the heat absorbing pad including a phase change material and absorbing external heat, and the heat insulating pad having a high thermal resistance.

The cell assembly may further include a pair of supporting members provided on both sides of the cell stack and coupled to side portions of the busbar frame to support the plurality of cells, and any one pair of cell assemblies that are adjacently disposed may be fixed to each other by coupling of the respective supporting members positioned to face each other.

The heat transfer prevention pad may be interposed between the cell stack and the supporting member.

The supporting member may be adhered to and coupled to the heat transfer prevention pad such that there is no gap between the supporting members and the heat transfer prevention pad.

### [Advantageous Effects]

A cell assembly of the present disclosure and a battery pack of the present disclosure including the cell assembly have the effect of improving thermal stability.

### [Brief Description of the Drawings]

FIG. 1 is an exploded perspective view of a cell assembly according to a first embodiment of the present disclosure.
FIG. 2 is a perspective view illustrating a coupling state of an end plate in the cell assembly of FIG. 1.
FIG. 3 is a cross-sectional view of the cell assembly of FIG. 1 cut in the width direction of the cell assembly.
FIG. 4 is a perspective view of a cell assembly according to a second embodiment of the present disclosure.
FIG. 5 is an exploded perspective view illustrating a plurality of cell assemblies in an aligned state according to a first embodiment.
FIG. 6 is a perspective view illustrating an important part of a pack case with a plurality of aligned cell assemblies mounted therein.
FIG. 7 is a cross-sectional view of a pair of cell assemblies positioned between any one of the cross beams in the battery pack of FIG. 6.
FIG. 8 is a perspective view illustrating a pack case with a plurality of cell assemblies mounted therein according to a second embodiment.
FIG. 9 is a cross-sectional view of a pair of cell assemblies in close contact in the battery pack of FIG. 8.

### [Detailed Description]

Hereinafter, the present disclosure will be described in detail with reference to the drawings. Prior to this, terms and words used in the present specification and claims should not be construed as limited to general or dictionary terms and should be interpreted with the meaning and concept in accordance with the technical idea of the present disclosure based on the principle that the inventors have appropriately defined the concepts of terms in order to explain the invention in the best way.

Accordingly, it is to be understood that the embodiments described herein, and the configurations illustrated in the drawings are only the most preferred embodiments of the present disclosure and are not intended to be representative of all of the technical ideas of the present disclosure, and that there may be various equivalents and modifications that may be substituted for them at the time of filing.

In addition, in describing the present disclosure, specific descriptions of related disclosed configurations or functions are omitted where it is considered that such detailed descriptions would obscure the subject matter of the present disclosure.

The present disclosure is shown in embodiment to more fully explain the present disclosure to those of ordinary skill in the art, and therefore, the shapes and sizes of the components in the drawings may be exaggerated, omitted, or shown schematically for clarity. Accordingly, the size or proportions of each component are not necessarily indicative of its actual size or proportions.

The present disclosure relates to a cell assembly and a battery pack including the same, wherein the battery pack of the present disclosure has improved thermal stability by maximally suppressing heat transfer between each of the accommodated cell assemblies.

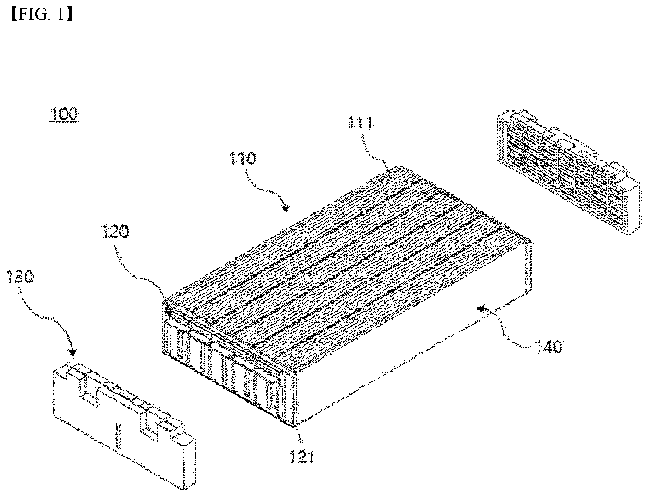

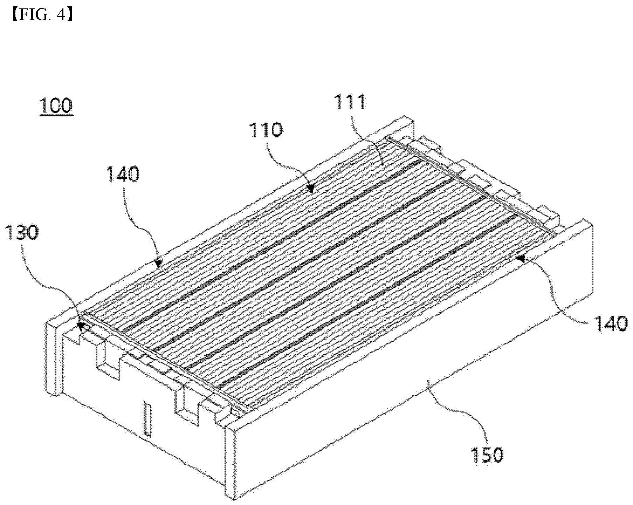

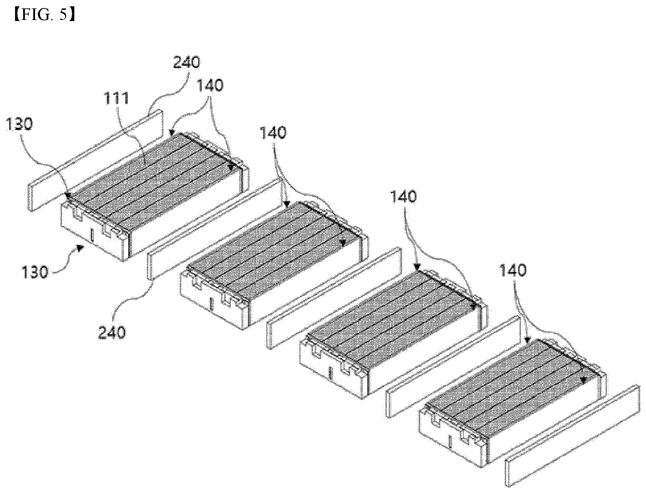

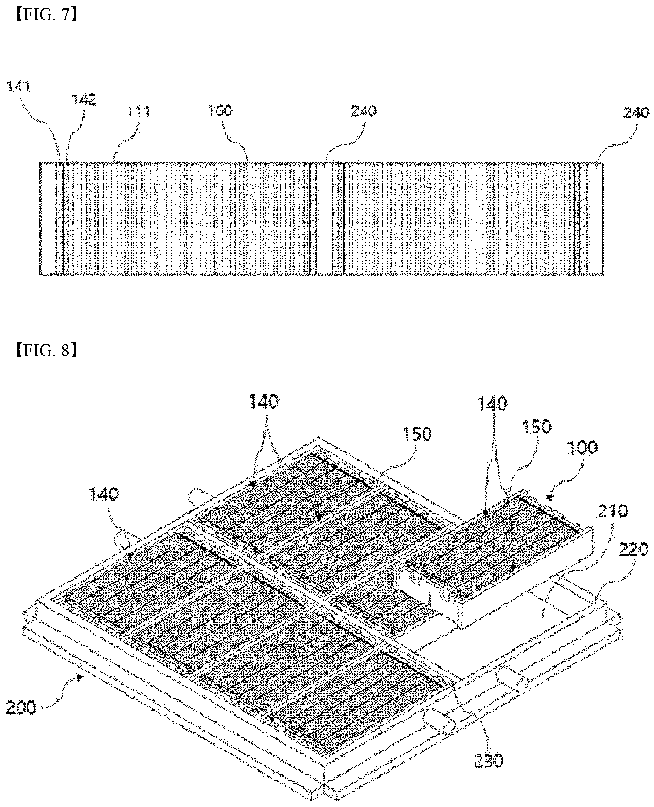

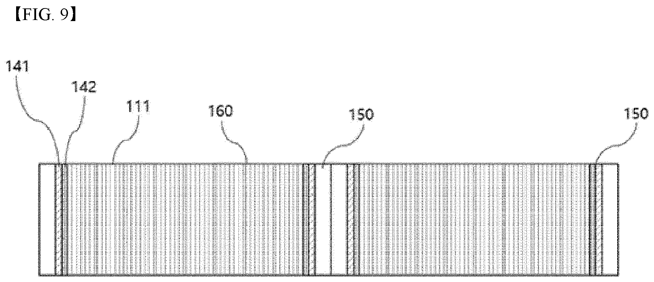

FIGS. 1 to 3 relate to a cell assembly according to a first embodiment of the present disclosure, FIG. 4 relates to a cell assembly according to a second embodiment of the present disclosure, FIGS. 5 to 7 relate to a battery pack including a cell assembly according to a first embodiment of the present disclosure, and FIGS. 8 and 9 relate to a battery pack including a cell assembly according to a second embodiment of the present disclosure.

Hereinafter, specific embodiments of a cell assembly and a battery pack according to the present disclosure will be described in detail with reference to the accompanying drawings. For reference, the directions of front, back, up, down, left, and right used in the following description to designate relative positions are for the purpose of understanding the disclosure and refer to the directions shown in the drawings unless otherwise specified.

Here, a width direction of the cell assembly is defined as referring to a direction in which the cells are stacked, and a longitudinal direction of the cell assembly is defined as referring to a direction orthogonal to the width direction of the cell assembly, in other words, a direction connecting both sides of the busbar frame or end plate being coupled.

In addition, the width direction of the battery pack refers to the longitudinal direction of the cell assembly accommodated in the battery pack, and the longitudinal direction of the battery pack refers to the width direction of the cell assembly accommodated in the battery pack.

### Cell assembly 100

The cell assembly 100 of the present disclosure includes a cell stack 110 comprising a plurality of cells 111.

The cells 111 comprise an electrode assembly alternately stacked with electrodes and separators including negative and positive electrodes, electrode leads electrically connected to the electrodes, and a battery case wrapped around and sealing the electrode assembly such that the electrode leads protrude outside.

The cells 111 may be divided into prismatic cells 111 and pouch-type cells 111 according to the shape of the electrode assembly and the battery case.

The prismatic cell 111 may be in the stack form in which the electrode assembly is stacked with electrodes and separators alternately stacked, and may be in the stack-folding form in which the electrodes and the like are provided on a sheet-type separator folded at certain intervals.

The prismatic cell 111 is inserted in the battery case in which the electrode assembly is in the form of a square box.

The pouch-type cell 111 may be in the stack form, wherein the electrode assembly is in the stack form, or may be in the stack-folding form.

The pouch-type cell 111 is an electrode assembly inserted within a pouch-shaped cell case. Thus, the cell assembly 100 may include any one of the cylindrical cell 111, the prismatic cell 111, and the pouch-type cell 111.

The cell assembly 100 includes a busbar frame 120 including a plurality of cells 111 and a busbar 121 in electrical connection with electrode leads included in each of the cells 111.

The cell assembly 100 may further include a module frame wrapped around the perimeter of the cell stack 110 such that each of the cells 111 is protected from an external impact. In this case, the module frame may be provided to support or protect only a portion of the cell stack 110, or it may be provided on all portions of the exposed cell stack 110 to completely isolate the cell stack 110 from the outside.

However, for ease of understanding of the interior structure, embodiments of the present disclosure will focus on the cell assembly 100 without the module frame configuration applied.

### (first embodiment)

FIG. 1 is an exploded perspective view of a cell assembly 100 according to a first embodiment of the present disclosure.

The cell stack assembly 100 of the present disclosure includes a cell stack 110 and a busbar frame 120, as shown in the FIG. 1.

The cell stack 110 is in the form of a plurality of cells 111 stacked in one direction.

Each of the cells 111 includes an electrode assembly alternately stacked with electrodes and separators, an electrode lead in connection with the electrodes, a case wrapping around the electrode assembly such that the electrode lead protrudes outside, and an electrolyte filled with the electrode assembly within the case.

The electrode may be a positive electrode having a coating of a slurry of positive electrode active material, binder resin, conductor and other additives, etc. on at least one side of a current collector, or a negative electrode having a coating of a slurry of negative electrode active material, binder resin, conductor and other additives, etc. on at least one side of a current collector. Thus, the electrode assembly comprises alternately stacked positive electrode, separator and negative electrode.

The positive electrode active material may include a lithium-containing transition metal oxide, and the negative electrode active material may include a lithium metal, a carbon material, and a metal compound, or a mixture thereof, from which lithium ions may be adsorbed and released.

The separator may be a conventional porous polymer film used in lithium secondary batteries.

The case wherein a sheet material is processed into a predetermined shape. In this case, the sheet material comprises a multilayer structure in which an outermost outer resin layer made of an insulating material such as polyethylene terephthalate (PET) or nylon and a metal layer made of aluminum material which maintains mechanical strength and prevents moisture and oxygen infiltration, and an inner resin layer made of a polyolefin-based material which has thermal adhesion and serves as a sealing material are stacked.

The sheet material forming the case may have a predetermined adhesive resin layer interposed between the inner resin layer and the metal layer, and between the outer resin layer and the metal layer, as needed. The adhesive resin layer is for smooth attachment between different types of materials and is formed in a single layer or multilayer, and the material may be conventionally a polyolefin-based resin, or a polyurethane resin for smooth processing, and mixtures thereof may also be used.

The cell 111 may be categorized as prismatic, pouch-type, and cylindrical depending on the shape of the electrode assembly and the case. However, in the detailed description and drawings of the present disclosure, the pouch-type cell 111 will be described as an example for ease of understanding.

The busbar frame 120 includes a busbar frame 120 in electrical connection with electrode leads of the cell stack 110, coupling to at least one of a front surface and a rear surface of the cell stack 110.

The busbar frame 120 serves to apply pressure to each of the cells 111 included in the cell stack 110 and align them, as well as to collect the electrode leads protruding from each of the cells 111. Specifically, a conductive busbar frame 120 is fixed and provided on the busbar frame 120, and a plurality of electrode leads drawn out from the cell stack 110 are coupled to the busbar frame 120. The coupling of the electrode leads and the busbar frame 120 is conventionally performed by welding, but any other coupling method capable of electrically connecting the electrode leads and the busbar frame 120 can be utilized.

The cell assembly 100 may further comprise an end plate 130 covering the busbar frame 120.

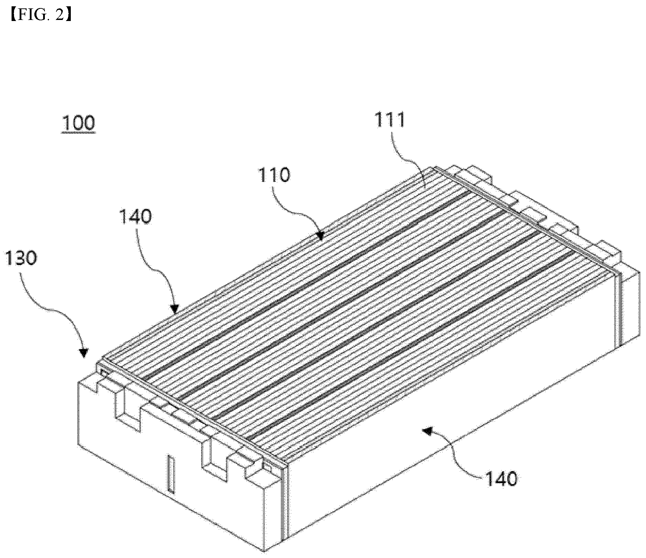

FIG. 2 is a perspective view illustrating a coupling state of an end plate 130 in the cell assembly 100 of FIG. 1.

The cell assembly 100 may further include the end plate 130 configured to cover the busbar frame 120 to protect the busbar frame 120 from an external impact, as shown in the FIGS. 1 and 2.

The cell assembly 100 of the present disclosure may further comprise heat transfer prevention pads 140 having resistance to heat transfer on both sides of the cell stack 110.

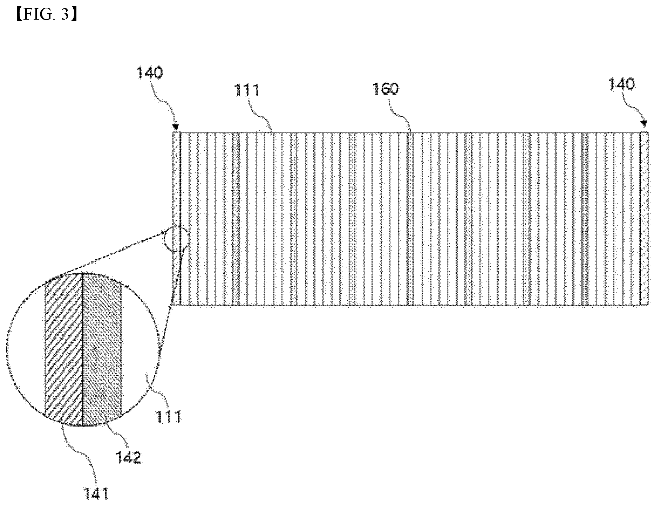

FIG. 3 is a cross-sectional view of the cell assembly 100 of FIG. 1 cut in the width direction of the cell assembly 100.

Referring to FIG. 3, a pair of heat transfer prevention pads 140 are provided on both sides of the cell stack 110, respectively.

The heat transfer prevention pads 140 include a heat absorbing pad 141 and a heat insulating pad 142. In other words, the heat transfer prevention pads 140 include a heat absorbing pad 141 and a heat insulating pad 142 laminated to each other.

Specifically, the heat absorbing pad 141 comprises a phase change material and serves to absorb heat from a material in contact with it.

The heat absorbing pad 141 includes a heat absorbing material having a state of any one of a solid and a liquid, and the heat absorbing material is phase changed by absorbing heat of a material contacted with the heat absorbing pad 141. Thus, the heat absorbing pad 141 can absorb a certain amount of heat of the contacted material.

The heat insulating pad 142 is characterized by having a high thermal resistance.

Specifically, the heat insulating pad 142 includes an insulating material having low thermal conductivity, and the insulating material impedes the movement of heat through the heat insulating pad 142.

In some embodiments, the heat absorbing pad 141 is provided facing one side of the cell 111 stacked at the outermost position of the cell stack 110, as shown in FIG. 3, and the heat insulating pad 142 is interposed between the heat absorbing pad 141 and the cell stack 110.

In another embodiment, not shown, the heat insulating pad 142 is provided facing one side of a cell 111 stacked at an outermost position of the cell stack 110, and the heat absorbing pad 141 is interposed between the heat insulating pad 142 and the cell stack 110.

In other words, the heat transfer prevention pad 140 is configured such that any one of the heat insulating pad 142 and the heat absorbing pad 141 is attached to one side of the cell stack 110.

The heat absorbing pad 141 primarily impedes the movement of heat through the heat insulating pad 142 in contact with the cell stack 110 when high temperature heat is generated in the adjacent cell stack 110. In addition, some of the heat conducted through the heat insulating pad 142 is secondarily absorbed by the heat absorbing pad 141.

The heat absorbing pad 141 is characterized by absorbing external heat.

The heat transfer prevention pad 140 of the present disclosure including the heat absorbing pad 141 and the heat insulating pad 142 absorbs the heat and simultaneously maximally inhibits the passage of heat when the contacted material emits heat.

In some embodiments, the cell stack 110 may further include a compression pad 160 interposed between any one pair of cells 111 among the plurality of cells 111.

The cell stack 110 may include a plurality of compression pads 160 interposed between the cells 111, and in this case, the intervals of the compression pads 160 may be regular as shown in FIG. 3, or may be irregular. For example, one cell 111 may be located between a pair of compression pads 160, or a plurality of cells 111 may be located.

The compression pads 160 may at least partially absorb impact and pressure that may occur between the stacked cells 111.

The compression pads 160 may be inserted into the cell stack 110 at predetermined intervals to physically separate the cells 111.

### (second embodiment)

FIG. 4 is a perspective view of a cell assembly 100 according to a second embodiment of the present disclosure.

Referring to FIG. 4, the cell assembly 100 may further include supporting members 150 for protecting both sides of the exposed cell stack 110.

In other words, the cell assembly 100 of the present disclosure may further include a pair of supporting members 150, each provided on both sides of the cell stack 110 to support the plurality of cells 111 as shown in FIG. 4.

The supporting members 150 serve to protect the cell stack 110 and the heat transfer prevention pads 140 provided on both sides of the cell stack 110 from an external impact.

In addition, the supporting member 150 serves to provide a place where coupling members, such as bolt screws, etc. are directly coupled for fixing the cell stack 110 to a battery pack in mounting the cell assembly 100 to the battery pack or the like.

The supporting member 150 may also serve to impede the movement of heat between the cell assembly 100 including the supporting member 150 and other cell assemblies adjacent thereto.

In some embodiments, the supporting member 150 may be coupled to a side portion of a busbar frame 120 provided adjacent to the cell stack 110.

In some embodiments, the supporting member 150 may be coupled to a side portion of an end plate 130 provided on the busbar frame 120 .

### Battery pack

The battery pack of the present disclosure includes a cell assembly 100 and a pack case 200 in which the cell assembly 100 is seated. In other words, a plurality of cell assemblies 100 according to the first embodiment or the second embodiment may be assembled and mounted in one pack case 200 to form a battery pack.

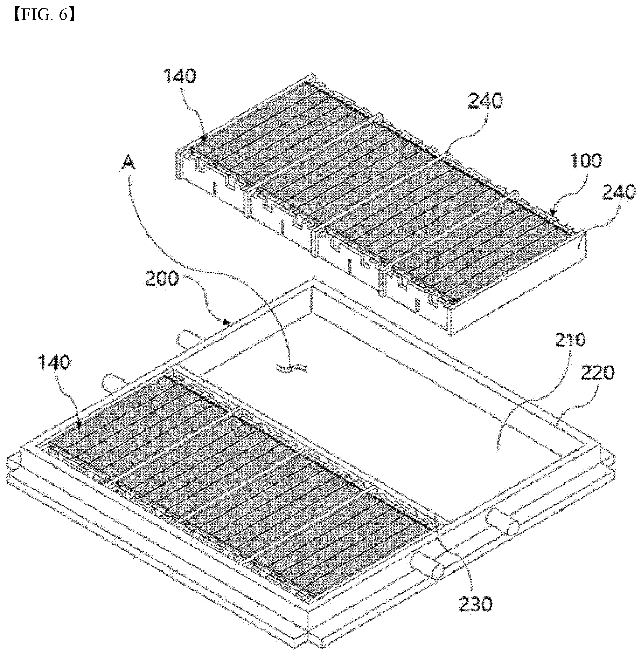

FIG. 5 is an exploded perspective view illustrating a plurality of cell assemblies 100 in an aligned state according to a first embodiment, and FIG. 6 is a perspective view illustrating an important part of a pack case 200 with a plurality of aligned cell assemblies 100 mounted therein.

Referring to FIGS. 5 and 6, the battery pack of the present disclosure includes the cell assembly 100 and the pack case 200 including a seating space A in which the cell assembly 100 is seated.

In some embodiments, the pack case 200 includes a base plate 210 configured to wrap around and support a lower portion of the plurality of cell assemblies 100 and a side beam 220 configured to wrap around and support a side portion.

In some embodiments, the pack case 200 may further include cross beams 240 separating each of the cell assemblies 100.

The plurality of cell assemblies 100 may be aligned in parallel as shown in FIG. 5, wherein the cross beams 240 may be disposed between the pair of adjacent cell assemblies 100 in the width direction to physically separate each cell assembly 100 from each other while simultaneously supporting side portions of the cell assemblies 100.

The seating space A is a space formed by the upper surface of the base plate 210 and the inner surface of the side beam 220, and the plurality of cell assemblies 100 are seated in the seating space A.

The pack case 200 may further include a center beam 230 coupling with the base plate 210 across the center portion to divide the seating space A as shown in FIG. 6. The center beam 230 divides the seating space A of the pack case 200 into two compartments, and ensures physical isolation between the cell assemblies 100 seated in each compartment space.

In some embodiments, the cross beams 240 may be assembled in the pack case 200 with the cell assemblies 100 as shown in the FIGS. 5 and 6. In other words, the cross beams 240 may be in primary coupling with each of the cell assemblies 100 adjacently disposed, and the cross beams 240 may be coupled to the base plate 210 to fix the cell assemblies 100 to the pack case 200.

In some embodiments, the cross beams 240 may be coupled to the center beam 230 and side beam 220 separately from the cell assemblies 100. In other words, the cross beams 240 interposed between the cell assemblies 100 may be coupled to the base plate 210, and may also be coupled to the center beam 230 and side beam 220. Specifically, both ends of the cross beam 240 may be coupled with a side portion of the center beam 230 and an inner surface of the side beam 220, respectively.

Thus, a plurality of cell assemblies 100 may be separately seated in the spaces formed by the divisions of the side beam 220, the center beam 230, and the cross beam 240, respectively.

In some embodiments, the cross beam 240 may prevent each cell assembly 100 from being shaken or damaged by an external impact. Therefore, the cross beams 240 may be adhered to and coupled to the side portion of the cell stack 110 such that there is no gap between the cross beams 240 and the cell assembly 100, as shown in FIG. 6.

FIG. 7 is a cross-sectional view of a pair of cell assemblies 100 positioned between any one of the cross beams 240 in the battery pack of FIG. 6. More specifically, FIG. 7 is a cross-sectional view of the pair of cell assemblies 100 cut in the width direction of the cell assemblies 100, and is an embodiment in which the heat insulating pad 142 is interposed between the heat absorbing pad 141 and the cell stack 110.

Referring to FIG. 7, the cross beams 240 are in contact with the heat absorbing pads 141 of the cell assemblies 100 facing them. In other words, the high temperature heat transferred from any one of the cell assemblies 100 can pass through the cross beams 240 and be transferred first to the heat absorbing pads 141 included in the other cell assembly 100. The heat absorbing pads 141 primarily absorb the heat conducted from the cross beams 240, and the heat insulating pads 142 adjacent to the heat absorbing pads 141 maximally impede the transfer of any excess heat not absorbed by the heat absorbing pads 141.

Although not shown, in case of an embodiment with heat insulating pads 142 interposed between the heat absorbing pads 141 and the cell stack 110, the heat insulating pads 142 primarily impede heat conducted from the cross beam 240. Then, heat absorbing pads 141 adjacent to the heat insulating pads 142 absorb excess heat that passes through the heat insulating pads 142.

The heat transfer prevention pad 140 of the present disclosure can reduce heat transferred by the above two methods.

In a conventional battery pack, a pair of cell assemblies 100 having a cross beam 240 between them are located at a very close distance, so that if any one of the cell assemblies 100 undergoes thermal runaway, the high temperature heat generated by the thermal runaway cell assembly 100 can be transferred to the other cell assembly 100 through the cross beam 240 in contact. In contrast, in the case of the battery pack of the present disclosure, the transfer of this heat can be suppressed to some extent by the heat transfer prevention pads 140 provided on each cell assembly 100.

FIG. 8 is a perspective view illustrating a pack case 200 with a plurality of cell assemblies 100 mounted therein according to a second embodiment, and FIG. 9 is a cross-sectional view of a pair of cell assemblies 100 in close contact in the battery pack of FIG. 8.

The pack case 200 of FIG. 8 includes cell assemblies 100 according to the second embodiment shown in the FIG. 4.

The cell assembly 100 further includes a pair of supporting members 150 provided on both sides of the cell stack 110 and coupled to side portions of the busbar frame 120 to support the plurality of cells 111.

Accordingly, any one pair of adjacently disposed cell assemblies 100 may be fixed by the coupling of their respective supporting members 150 positioned to face each other. **In** this case, two adjacent supporting members 150 may be screwed to and fixed to each other through a coupling member, such as a bolt, etc.

The battery pack including the cell assembly 100 and pack case 200 of the FIG. 8 includes supporting members 150 on both sides of each cell assembly 100. Therefore, unlike the battery packs illustrated in FIGS. 5 and 6, two supporting members 150 are interposed between a pair of adjacently disposed cell stacks 110.

In some embodiments, the supporting members 150 not only enhance the supporting force of the cell stacks 110, but may also serve to impede the movement of heat between each cell assembly 100.

Referring to FIG. 9, two supporting members 150 are interposed between a pair of cell stacks 110. In this case, when any one of the cell stacks 110 is thermally runaway, the high temperature heat generated by the thermally runaway cell stack 110 can be absorbed or blocked as it passes through the heat insulating pad 142, the heat absorbing pad 141 and the supporting member 150 in turn, and then moves through the supporting member 150, the heat absorbing pad 141 and the heat insulating pad 142 of the other cell assembly 100 in succession.

Although not shown, the battery pack of the present disclosure further includes an upper case coupled to the pack case 200 to cover an upper portion of the cell assemblies 100 seated in the pack case 200.

The upper case specifically is coupled with side beams 220 of the pack case 200 to enable each cell assembly 100 located in the interior space to be isolated from the outside.

As aforementioned, the present disclosure has been described in more detail through the drawings and embodiments. However, since the configuration described in the drawings or embodiments described herein is merely one embodiment of the present disclosure and do not represent the overall technical spirit of the disclosure, it should be understood that the disclosure covers various equivalents, modifications, and substitutions at the time of filing of this application.

### [Description of Reference Numerals]

100: cell assembly
110: cell stack
111: cell
120: busbar frame
121: busbar
130: end plate
140: heat transfer prevention pad
141: heat absorbing pad
142: heat insulating pad
150: supporting member
160: compression pad
200: pack case
210: base plate
220: side beam
230: center beam
240: cross beam
A: seating space

## Claims

1. A cell assembly, comprising:
a cell stack comprising a plurality of stacked cells having electrode leads protruding therefrom; and
a heat transfer prevention pad having resistance to heat transfer and provided on both sides of the cell stack.

2. The cell assembly of claim 1, wherein the heat transfer prevention pad comprises a heat absorbing pad comprising a phase change material and absorbing external heat, and a heat insulating pad having a high thermal resistance.

3. The cell assembly of claim 2, wherein the heat transfer prevention pad is configured to attach any one of the heat absorbing pad and the heat insulating pad to one side of the cell stacked at an outermost position of the cell stack.

4. The cell assembly of claim 1, further comprising, a pair of supporting members provided on both sides of the cell stack to support the plurality of cells,
wherein the heat transfer prevention pad is interposed between the cell stack and the supporting member.

5. The cell assembly of claim 1, wherein the cell stack further comprises a compression pad interposed between any one pair of cells of the plurality of cells.

6. A battery pack, comprising: the cell assembly of claim 1; and
a pack case comprising a seating space in which the cell assembly is seated,
wherein the pack case, comprising:
a base plate supporting a lower portion of the cell assembly; and
a side beam coupled to an edge part of the base plate to support a side portion of the cell assembly.

7. The battery pack of claim 6, wherein the plurality of cell assemblies is seated in the seating space, and
wherein the pack case further comprises a cross beam provided between any one pair of the adjacent cell assemblies.

8. The battery pack of claim 7, wherein the cross beam is adhered to and coupled to side portions of the cell assemblies such that there is no gap between the cross beam and the cell assemblies.

9. The battery pack of claim 7, wherein the side surfaces of the cross beam are in close contact with the heat absorbing pad of the cell assembly facing it.

10. The battery pack of claim 7, wherein the cross beam is coupled to each of the adjacent disposed cell assemblies, and the cross beam is coupled to the base plate to fix the cell assembly to the pack case.

11. The battery pack of claim 6, wherein the heat transfer prevention pad comprises a heat absorbing pad comprising a phase change material and absorbing external heat, and a heat insulating pad having a high thermal resistance.

12. The battery pack of claim 6, wherein the cell assembly further comprises a pair of supporting members provided on both sides of the cell stack to support the plurality of cells, and any one pair of cell assemblies that are adjacently disposed is fixed to each other by coupling of the respective supporting members positioned to face each other.

13. The battery pack of claim 12, wherein the heat transfer prevention pad is interposed between the cell stack and the supporting member.

14. The battery pack of claim 12, wherein the supporting member is adhered to and coupled to the heat transfer prevention pad such that there is no gap between the supporting member and the heat transfer prevention pad.
